# EUROPEAN PATENT APPLICATION

(11) **EP 0 761 763 A1**
(43) Date of publication of application: **12.03.1997**
(21) Application number: 96905055.8
(22) Date of filing: 11.03.1996
(51) Int. Cl.: C08L 101/00, B29B 17/00, C08J 11/04

(54) **RECLAIMED THERMOPLASTIC RESIN COMPOSITIONS AND PROCESS FOR THE PRODUCTION THEREOF**

(30) Priority: 10.03.1995 JP 79457/95; 24.03.1995 JP 91543/95
(71) Applicant: DAICEL CHEMICAL INDUSTRIES, LTD., Osaka-fu 590 (JP)
(72) Inventor: OHTSUKA, Yoshihiro, Hiroshima 739-06 (JP); AIZAWA, Katsumi, Hiroshima 739-06 (JP); OSHINO, Yasuhiro, Hiroshima 739-06 (JP)
(74) Representative: Portal, Gérard
(86) International application number: JP9600595
(87) International publication number: WO9628514

(57) **Abstract**

According to a first aspect of the present invention, a regenerated thermoplastic resin composition is offered by melt blending 0.1 to 30 parts by weight of an epoxidized (partially hydrogenated) diene-based polymer (B) to 100 parts by weight of resin pieces (A) obtained by crushing the molded products comprising a thermoplastic resin (A1) or a thermoplastic resin composition (A2).

According to a second aspect of the present invention, a regenerated thermoplastic resin composition is offered comprising 20 to 67 weight % of a non-rigid polyethylene resin (a), 30 to 77 weight % of a waste material (b) of a structural product made by laminating at least two kinds of thermoplastic resins, and 3 to 20 weight % of epoxidized (partially hydrogenated) diene-based polymer.

## Description

### Technical Field

The present invention relates to a regenerated (for recycling) thermoplastic resin composition utilizing waste molded products. In more detail, the present invention relates to a regenerated thermoplastic resin composition which is obtained by melt blending an epoxidized (partially hydrogenated) diene-based polymer (B) with resin pieces which are obtained by crushing molded products comprising a thermoplastic resin (A₁) or a thermoplastic resin composition (A₂).

Also, the present invention relates to a regenerated (for recycling) thermoplastic resin composition having excellent flow property, strength property and moldability by utilizing a waste material of a structure which is made by laminating two or more kinds of thermoplastic resins.

### Background Art

At present, thermoplastic resins such as a saturated polyester resin and a polycarbonate resin and thermoplastic resin compositions thereof are used in various fields as molding materials for containers, packaging films, household sundries, office equipments, electric and electronic parts, automotive components and the like due to their excellent moldability, hygienic property, appearance, thermal resistance, weatherability and low price. While an amount of molded products from these thermoplastic resins or thermoplastic resin compositions is large and is still increasing year by year even at present, an amount of wastes of the molded products become useless after use is also increasing to be a social problem.

The molded products which became useless after use have been disposed mostly by burning or burying underground. Burning of plastics, however, requires a special incinerator and a large amount of energy. Also, the combustion gas generated in incineration often causes problems such as air pollution. Burying underground causes waste land pollution because of no reduction to soil and the disposal volume is limited. In either case, the disposition is connected with environmental destruction to be a social problem.

Thermoplastic resins such as a saturated polyester resin have a low impact property and further reduce the impact property due to thermal degradation in various kinds of molding processes for product manufacture. Thus, these resins are not repeatedly used by recycling at present. For example, when crushed materials of these molded products were molded repeatedly, desired molded products could not be obtained because of easy fracture from the inferior impact property or, even if produced, the molded products could not be practically used because of considerable deterioration in the properties.

On the other hand, as for the reuse of waste plastics by recycling, for example, a method is proposed to utilize wastes by crushing waste products of a polyethylene terephthalate resin, blending thermoplastic materials such as polystyrene, polyethylene, polyamide or asphalt and modifiers, and being extruded to a composite material with an extruder (Japanese Patent Unexamined Publication No. 215514/1990). Another patent is also proposed regarding a composite material which is obtained by adding crushed pieces of a biaxially stretched polyethylene terephthalate film, sheet or wastes therefrom with fibers and adhesives (Japanese Patent Unexamined Publication No. 277511/1991). By these methods, however, the thermoplastic materials, the modifiers and the adhesives which are mixed with wastes can not exhibit their functions with practical applicability and the properties of the reproduced products are insufficient.

Similarly, while thermoplastic resins are produced and consumed in wide range and in large quantity as various industrial parts and packaging containers for their excellent properties such as light weight, easy moldability, easy coloring and no rusting, laminated structural products (or structures) of two or more thermoplastic resins are used in many fields. For example, structural products comprising fibrous structural products, sheets, films or foamed products of a thermoplastic resin and another thermoplastic resin laminated thereon are used as car interior materials, bag materials, packaging and container materials for their properties of improved touch, cushion feel and chemical resistance.

To these structural products, a social need of resource recycling is increasing from the viewpoints of resource saving and environmental protection. Accordingly, to laminated structural products of the above-mentioned two or more thermoplastic resins, methods to recover the components separately and to recover the components as intermediate materials by depolymerisation are proposed.

However, since most industrially used structural products obtained by laminating two or more thermoplastic resins have generally strong adhesion between two layers or intertwined structure, the industrial reuse by depolymerization faces many problems due to the difficulty of separation to individual components or complicated depolymerized components.

As a regeneration method of laminated products of two or more thermoplastic resins, an attempt to reuse these laminated products has been made by mixing to a multicomponent material without separation. By the simple mixing, however, it is hard to obtain necessary fluidity and strength properties and to get an excellent appearance of the molded products. In addition, though in some fields these waste materials are crushed and reused in production processes, the using ratio of waste generally stays at the level as low as 20 weight % at present.

A second aspect of the present invention is, under the above-mentioned circumstances, to utilize structural products waste of two or more thermoplastic resins without separation into the individual components. Also another object is to offer a regenerated thermoplastic resin composition which can be formulated with at least 30 weight %, preferably 50 weight % in a final product and which can hold necessary fluidity, strength properties and appearance property as a molding material.

### Disclosure of the Invention

In view of the above circumstances, the present inventors, as a result of the extensive study as for the recycling of waste molded products composed of thermoplastic resins or thermoplastic resin compositions, discovered that a thermoplastic resin composition which causes little problems in a mechanical strength at the recycled molding could be obtained by crushing molded products and by melt blending epoxidized (partially hydrogenated) diene-based polymers, thus successfully completed a first aspect of the present invention.

Also, the present inventors, from the earnest studies to solve the problems of structural products which laminate the above-mentioned two or more thermoplastic resins, discovered that incorporation of a non-rigid polyethylene resin and epoxidized (partially hydrogenated) diene-based polymers to the waste structural products made by laminating two or more thermoplastic resins produces regenerated thermoplastic resin compositions which is excellent in moldability such as fluidity, thus successfully completed the second aspect of the present invention.

Namely, according to the first aspect of the present invention, there is provided a production method of a regenerated thermoplastic resin composition, characterized by melt blending: 0.1 to 30 parts by weight of an epoxidized (partially hydrogenated) diene-based polymer (B) to the resin pieces (A) obtained by crushing molded products composed of a thermoplastic resin (A₁) or a thermoplastic resin composition (A₂). Similarly, according to the second aspect of the present invention, there is provided a regenerated thermoplastic resin composition comprising 20 to 67 weight % of a non-rigid polyethylene resin (a), 30 to 77 weight % of a waste material of a structural product (b) made by laminating at least two thermoplastic resins, and 3 to 20 weight % of epoxidized (partially hydrogenated) diene-based polymers (c). According to the second aspect of the present invention, there is further provided the production method of regenerated thermoplastic resin compositions, characterized by melt blending: 20 to 67 weight % of a non-rigid polyethylene resin (a), 30 to 77 weight % of a waste material of a structural product (b) made by laminating at least two thermoplastic resins, and 3 to 20 weight % of epoxidized (partially hydrogenated) diene-based polymers (c).

### Best Mode for carrying out the Invention

The first aspect of the present invention is explained below in detail.

The thermoplastic resin (A₁) in the first aspect of the present invention is not specifically limited but includes, for example, a saturated polyester resin, a polycarbonate resin, a polyamide resin, a polystyrene resin, an AS resin, an ABS resin, a polyarylene sulfide resin, a polyarylene ester resin and a polyphenylene ether resin. Of these thermoplastic resins, a saturated polyester resin and a polycarbonate resin are preferable.

A saturated polyester resin as a thermoplastic resin (A₁) is preferably one which comprises a dicarboxylic acid component which includes at least 40% of terephthalic acid and a diol component. Dicarboxylic acid components other than terephthalic acid include, for example, aliphatic dicarboxylic acids having a carbon number of 2 to 20 such as adipic acid, sebacic acid, dodecanoic dicarboxylic acid, aromatic dicarboxylic acids such as isophthalic acid, terephthalic acid, phthalic acid, naphthalene dicarboxylic acid, or cycloaliphatic acids such as cyclohexane dicarboxylic acid in sole or mixed form. Also, the above-mentioned diol components include, for example, aliphatic and aromatic diols such as ethylene glycol, 1,3-propylene glycol, 1,4-butanediol, 1,6-hexanediol, 1,10-decanediol, or 1,4-cyclohexanediol in sole or mixed form. Of these saturated polyesters, polyethylene terephthalate (PET) and/or polybutylene terephthalate (PBT) better exhibit the effect of the present invention.

A polycarbonate resin (PC) as a thermoplastic resin (A₁) has a main structure which is obtained by condensation of a divalent phenol as indicated by the following formula (1) (wherein X is a group selected from the group consisting of an alkylene group having a carbon number of 1 to 10, alkylidene group having a carbon number of 1 to 10, cylcoalkylene group having a carbon number of 4 to 8, -O-, -S-, and -SO₂-, R₁ and R₂ are alkyl groups having a carbon number of 1 to 12 and may be the same or different group, m and n are integers of 0 to 4, and p is 0 or 1) and a carboxylic acid derivative.

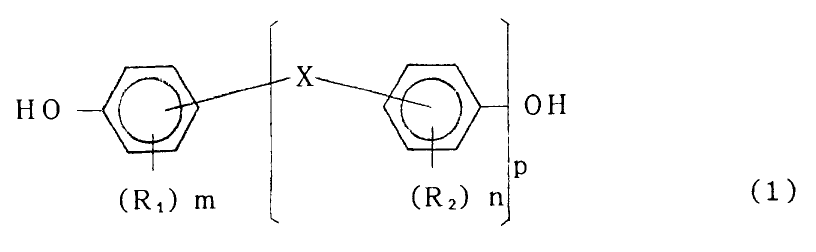

Examples of specific divalent phenols include bisphenol A, bis-(4-hydroxyphenyl)methane, bis-(4-hydroxy-3-methylphenyl)propane, 2,2-bis-(3', 5'-dibromo-4'-hydroxyphenyl)propane, resorcine, and hydroquinone. Bisphenol A is preferable among them. Examples of a carboxylic acid derivative include phosgene, diphenyl carbobnate, bisphenol A haloformate. Phosgene and diphenyl carbonate are preferable among them.

A polyamide resin (PA) as a thermoplastic resin (A₁) is obtained by polycondensation of a lactam having a three or larger membered ring, a polymerizable omega-amino acid, or a dibasic acid and a diamine, and it is, for example, an aliphatic polyamide resin such as polyamide 4.6, polyamide 6, polyamide 6.6, polyamide 6.10, polyamide 11, polyamide 12, polyamide 6.12, and an aromatic polyamide resin such as polyhexamethylene diamine terephthalamide, polyhexamethylene diamine isophthalamide and a polyamide having a xylene group. Of these, in particular, polyamide 6, polyamide 6.6 and polyamide 12 are preferable.

Polystyrene (PS) as a thermoplastic resin (A₁) is a polymer comprising an aromatic vinyl compound. Aromatic vinyl compounds include, for example, alkyl substituted styrene such as styrene, o-methyl styrene, o-methyl styrene, p-methyl styrene, m-methyl styrene, 2,4-dimethyl styrene, ethyl styrene, p-tert-butyl styrene; alpha-alkyl substituted styrene such as alpha-methyl styrene, alpha-methyl-p-methyl styrene; halogen substituted styrene such as chlorostyrene. Furthermore, there can be optionally employed other copolymerizable compounds such as an ethylene-based unsaturated carboxylic acid ester and a vinyl compound having amide group so as to copolymerize. Also, the method may be applied to a high-impact polystyrene (HIPS) copolymerizing or graft-polymerizing rubber-like polymers. The rubber-like polymers mentioned herein include diene-type rubber-like polymers such as a polybutadiene, a polyisoprene, natural rubber and nondiene-type rubber-like polymers such as an ethylene-propylene copolymer, an ethylene-propylene-unconjugated copolymer, an acrylic rubber. These rubber-like polymers may be used solely or in blended form of two or more kinds. Furthermore, there can be also employed a conjugated rubber-like polymer and an unconjugated rubber-like polymer as a mixture.

An AS resin is a copolymer which is obtained by polymerizing a cyano vinyl compound and an aromatic vinyl compound. The cyano vinyl compounds include, for example, acrylonitrile and methacrylonitrile. The aromatic vinyl compounds are identical to the compounds described in the above-mentioned polystyrene-based resins.

An ABS-based rein as a thermoplastic resin (A₁) is a copolymer in which there is copolymerized a rubber-like polymer, a cyano vinyl compound, and an aromatic vinyl compound. As the rubber-like polymer, a diene-type rubber-like polymer or a nondiene-type rubber-like polymer may be used. The diene-type rubber-like polymers include, for example, polybutadiene, a butadiene-styrene copolymer, a butadiene-acrylonitrile copolymer, polyisoprene, a natural rubber. The nondiene-type rubber-like polymers include, for example, an ethylene-propylene copolymer, an ethylene-propylene-unconjugated diene copolymer and an acrylic rubber. These rubber-like polymers may be used solely or in a blended form of two or more kinds. Furthermore, there can be also employed a conjugated rubber-like polymer and an unconjugated rubber-like polymer as a mixture. The cyano vinyl compounds include, for example, acrylonitrile, methacrylonitrile. The aromatic vinyl compounds include, for example, styrene, alpha-methyl styrene, alpha-ethyl styrene, dimethyl styrene, chlorostyrene. Furthermore, there can be also employed other copolymerizable compounds such as ethylene-type unsaturated carboxylic acid esters, vinyl compounds having an amide group so as to copolymerize.

A polyarylene sulfide resin as a thermoplastic resin (A₁) is a polymer represented by a general formula -(-Ar-S-)n-, and the -Ar- group includes, for example, a divalent aromatic group such as -Ph-, -Ph-SO₂-Ph-, -Ph-O-Ph-, -Ph-CO-Ph-, -Ph-CH₂-Ph-, -Ph-C(CH₃)₂-Ph-, where Ph expresses a phenylene group, and a substituent such as Cl, Br or CH₃ may be introduced into the aromatic ring. These may be modified, if necessary, by copomerizing with polyfunctional monomers and/or by grafting with monomers having various functional groups. A particularly typical example is polyphenylene sulfide (PPS) containing -(-Ph-S-)- group as the constituent unit.

A polyarylene ester resin (PAR) as a thermoplastic resin (A₁) has the main structure which is obtained by a condensation polymerization of a divalent phenol mentioned in the polycarbonate paragraph or a derivative such as the diacetate and an aromatic dicarboxylic acid mentioned in the saturated polyester paragraph or a derivative such as an acid chloride and a phenyl ester. These may be optionally modified by copolymerization with polyfunctional monomers and/or by grafting with monomers having various functional groups. A particularly typical example is a polymer having a structure composed of a bisphenol A residual group, and a terephthalic acid residual group and an isophthalic acid residual group.

A polyphenylene ether resin (PPE) as a thermoplastic resin (A₁) is a polymer obtained by oxidation polymetization of one or more kinds of phenols designated by the following general formula (wherein R₁ to R₅ represent a hydrogen atom, a halogen atom such as Cl and Br, a hydrocarbon group such as methyl, ethyl, aryl and phenyl or a substituted hydrocarbon group such as a hydroxymethy, a cyanoethyl and a chlorophenyl, and they may be the same or different).

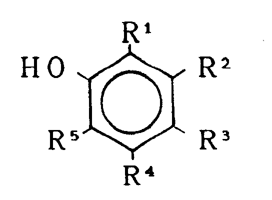

These may be optionally modified by copolymerization with a polyfunctional monomer and/or by grafting with a monomer having various functional groups. Particularly typical examples include a homopolymer of 2,6-dimethyl phenol or 2,6-diphenyl phenol and a copolymer of 2,6-dimethyl phenol as a major constituent and 3-methyl-6-t-butyl phenol or 2,3,6-trimethyl phenol as a minor constituent.

A thermoplastic resin composition (A₂) in the invention means a composition comprising two or more kinds of thermoplastic resins (A₁), is not specifically limited and includes, for example, a composition comprising at least two kinds of thermoplastic resins selected from a saturated polyester resin, a polycarbonate resin, a polyamide resin, an ABS resin, a polystyrene, a polyarylene sulfide resin, a polyarylene ester resin and a polyphenylene ether resin. And it includes a melt blend of a thermoplastic resin of one or more kinds of the above-mentioned thermoplastic resins (A₁) with a polyolefin resin such as polyethylene (PE), polypropylene (PP), an ethylene-vinyl acetate copolymer or its saponification products, a vinyl chloride resin and a vinylidene chloride resin. Specifically it includes a saturated polyester resin/a polycarbonate resin, a saturated polyester resin/an ABS resin, a saturated polyester resin/a polyphenylene ether resin, a polycarbonate resin/a ABS resin, a polycarbonate resin/a polyamide resin, a polystyrene/a polyphenylene ether resin, a saturated polyester resin/a polyarylene sulfide resin, a saturated polyester resin/a polyolefin resin, a polyamide resin/a polyolefin resin, a saturated polyester resin/a vinylidene chloride resin. Above all, a polycarbonate resin/polybutylene terephthalate, a polycarbonate resin/polyethylene terephthalate, a polybutylene terephthalate/a polyphenylene ether resin, a polycarbonate resin/an ABS resin, a polyamide resin/a polyphenylene ether resin, polystyrene/a polyphenylene ether resin, polyethylene terephthalate/polyethylene, polyethylene terephthalate/a polyvinylidene resin, polybutylene terephthalate/polypropylene, a polyamide resin/polypropylene, a polyamide resin/polyethylene and the like are preferable.

The molded products composed of a thermoplastic resin (A₁) or a thermoplastic resin composition (A₂) mean the molded products molded by blow molding, injection molding, extrusion molding or the like. The products by blow molding include bottles, or more specifically, food containers including beverage uses for juice and water, containers for cosmetics, containers for drugs. The products by injection molding include, for example, various parts used for office equipments, electrical products, automobiles, or more specifically, disks such as compact disks, covers, cases and the like. The products by extrusion molding include, for example, sheets, films, tubes for various applications.

Regarding the resin pieces (A) which is obtained by crushing the above-mentioned molded products, the crushing method and the size and shape of the resin pieces are not specifically limited but are acceptable only if the size and shape allow to feed to the extruder for melt blending. For example, the size of the resin pieces (A) is normally 0.5 to 20 mm as the maximum diameter or length. Also, the acceptable shapes of the resin pieces (A) include, for example, sphere, flake, block, powder, or pellet forms. The crushing method is not particularly limited but a roll crusher for ordinary use may be acceptable if the crusher can crush the molded products finer than the original size. Also, when these resin pieces are molded in pellet form with an extruder, the present invention may be applied to the pellets in the entirely same manner as the original resin pieces (A). Furthermore, the resin pieces may be flashes or liner parts which are generated as unnecessary by-products other than the products during molding such as injection molding.

The resin pieces (A) used in this invention may be a mixture of at least two kinds of resin pieces which are obtained by crushing molded products comprising mutually different thermoplastic resins or mutually different thermoplastic resin compositions. Also, the resin pieces may be a mixture of at least two kinds of resin pieces which are obtained by crushing the molded products composed of a thermoplastic resin and the molded products composed of a thermoplastic resin composition, respectively. The resin pieces may be, for example, a mixture of resin pieces which are obtained by crushing the molded products composed of saturated polyester resin and the resin pieces which are obtained by crushing the molded products composed of a polycarbonate resin. Further, the resin pieces of this invention may be a mixture of the resin pieces obtained by crushing the molded products composed of the above-mentioned thermoplastic resin or the thermoplastic resin compositions and the resin pieces obtained by crushing the molded products composed of the thermoplastic resins such as polyolefin resins like polyethylene (PE), polypropylene (PP), an ethylene-vinyl acetate copolymer or saponification products therefrom, a vinyl chloride resin, a vinylidene chloride resin. The resin pieces may be, for example, a mixture of resin pieces which are obtained by crushing the molded product composed of a saturated polyester resin and resin pieces which are obtained by crushing the molded product composed of a polyolefin resin, a mixture of resin pieces obtained by crushing the molded product composed of a saturated polyester resin and resin pieces obtained by crushing the molded product composed of a vinylidene chloride resin. The above resin mixtures include the cases where two or more kinds of thermoplastic resins or tnermoplastic resin compositions form a molded product such as a multilayer structural product.

The resin pieces (A) which are obtained by crushing the molded products composed of a thermoplastic resin (A₁) or a thermoplastic resin composition (A₂) may be added with other new thermoplastic resins and/or new thermoplastic resin compositions, other than the case where the resin pieces are used solely or in combined forms. For example, a new (unused) saturated polyester resin, a new polycarbonate resin and a new thermoplastic resin composition to the resin pieces obtained by crushing molded products composed of a saturated polyester resin, or a new saturated polyester resin, a new polycarbonate resin and a new thermoplastic resin composition to the resin pieces which are obtained by crushing molded products composed of polycarbonate resin.

An epoxidized (partially hydrogenated) diene-based polymer (B) used in the present invention is a polymer having a conjugated diene compound as a component or a polymer having as a component a conjugated diene compound partially hydrogenated and in which at least one double bond of the remaining double bonds from the conjugated diene compound is epoxidized. As the conjugated compounds, for example, one or more kinds may be selected from butadiene, isoprene, 1,3-pentadiene, 2,3-dimethyl-1,3-butadiene, and above all, butadiene, isoprene, and the combination thereof are preferable. And, the diene-based polymers may be random copolymers, homopolymers or block copolymers, for example, polybutadiene, polyisoprene, an acrylonitrile-butadiene copolymer, a natural rubber, a methyl methacrylate-styrene-butadiene copolymer, a styrene-butadiene copolymer, a styrene-butadiene-styrene block copolymer, a styrene-isoprene-styrene copolymer, a styrene-butadiene block copolymer and the like. Also, the invention includes the products in which the double bonds from these conjugated compounds may be partially hydrogenated and the remaining double bonds from the conjugated compounds are epoxidized.

The epoxidation of these (partially hydrogenated) diene-based polymers may be carried out using peracids and organic peroxides as the oxidizing agents. In particular, peracetic acid is a preferable epoxidizing agent for easy reaction control.

To the epoxidized (partially hydrogenated) diene-based polymers (B) in this invention, an ethylene-alpha-olefin copolymer rubber, an ethylene-alpha-olefin unconjugated diene ternary copolymer rubber, a butyl rubber, a styrene rubber, a nitrile rubber, a fluororubber, an urethane rubber and the like may be added. Above all, ethylene-alpha-olefin copolymer rubbers such as ethylene-propylene and ethylene-butene, ethylene-alpha-olefin-unconjugated diene ternary copolymer rubbers such as ethylene-propylene-(5-ethylidene-2-norbornene), ethylene-propylene-dicyclopentadiene, styrene rubbers such as (hydrogenated) styrene-butadiene block copolymer, (hydrogenated) styrene-isoprene block copolymer, hydrogenated styrene-butadiene rubber may be blended, and the content of the epoxidized (partially hydrogenated) diene-based polymer (B) may be 5 to 100 weight %, preferably 20 to 100 weight%.

The added quantity of the above-mentioned epoxidized (partially hydrogenated) diene-based polymer (B) is 0.1 to 30 parts by weight based on 100 parts by weight of resin pieces (A), preferably 1 to 20 parts by weight. An added quantity lower than 0.1 parts by weight can not give acceptable physical properties, and an added quantity over 30 parts by weight may produce poor moldability and insufficient physical properties.

Melt blending in the present invention may be carried out with a mixing apparatus such as a variety of single- or twin-screw extruders, Banbury mixer, rolls, a kneader of various kinds generally used.

When two or more different kinds of resin pieces (A) are used, the present invention allows to simultaneously melt blend three or more components together with the epoxidized (partially hydrogenated) diene-based polymers. It is also possible to melt blend the epoxidized (partially hydrogenated) diene-based polymer (B) and either of the resin pieces (A) in advance, then to melt blend the residual kind of the resin pieces (A). The preferred blending is the sequential blending in the former rather than the simultaneous blending in the latter. For example, among resin pieces which are obtained from a molded product composed of a saturated polyester resin or a polycarbonate resin, it is possible first to melt blend the resin pieces obtained from the molded product composed of a saturated polyester and the epoxidized (partially hydrogenated) diene-based polymer, and then to melt blend the resin pieces which are obtained from the molded product composed of a polycarbonate resin. On the other hand, it is possible first to melt blend the resin pieces obtained from the molded product composed of a polycarbonate resin and the epoxidized (partially hydrogenated) diene-based polymer, and then to melt blend the resin pieces obtained from the molded product composed of a saturated polyester. The melt blend of the resin pieces which are obtained from the molded product composed of a saturated polyester and the epoxidized (partially hydrogenated) diene-based polymer at the first stage gives an excellent impact resistance of the molded product obtained. The melt blend of the resin pieces which are obtained from the molded product composed of a polycarbonate resin and the epoxidized (partially hydrogenated) diene-based polymer at the first stage has an advantage of easy melt blending. The regenerated thermoplastic resin compositions produced by this invention can be molded by various molding methods with any molding machine, for example, a blow molding, injection molding and extrusion molding machine.

While various additives contained in the thermoplastic resins (A₁) or the thermoplastic resin compositions (A₂) are usually contained in the regenerated thermoplastic resin compositions produced by this invention, if necessary, additives such as, for example, pigments, dyes, reinforcing agents, fillers, thermal stabilizers, antioxidants, weatherability improvers, nucleating agents, lubricants, antistatic agents, flame retardants, plasticizers may newly or additionally be added. In particular, addition of reinforcing agents or fillers such as various surface-treated glass fibers, talc and calcium carbonate produces effective materials having a high rigidity and a high impact resistance.

The quantity of additives to be mixed such as reinforcing agents and fillers is normally in the range of 10 to 100 parts by weight to 100 parts by weight of the resin pieces.

Then the second aspect of this invention is explained in detail. The non-rigid polyethylene-based resin (a) in the second aspect of the present invention is of a density of 0.026 g/cm³ (23°C ) or lower and may be one or more kinds of polyethylene polymers selected from a low-density polyethylene prepared by a high-pressure method, a linear low-density polyethylene as a copolymer of ethylene and an alpha-olefin, an ultra-low density polyethylene and an ethylenic polymer as a copolymer of ethylene and a comonomer whose content is 35 weight % or lower. The above-mentioned comonomer copolymerized with ethylene includes unsaturated carboxylic acids copolymerizable with ethylene or anhydrides therefrom, ester derivatives, vinyl esters, for example, acrylic acid, methacrylic acid, vinyl acetate, ethyl acrylate, methyl methacrylate, zinc methacrylate, maleic anhydride and the like, and these may be used independently or in a combination of the above compounds.

The thermoplastic resin as a component constituting the waste material (b) in the present invention means a thermoplastic resin selected from, for example, various normally used synthetic resins such as a polyamide resin, a polyester resin, a vinyl chloride resin, a polystyrene resin, a modified polyphenylene ether resin, a polycarbonate resin, a polypropylene resin, polyethylene resins such as a low density polyethylene resin, a medium density polyethylene resin, a high density polyethylene resin, a polyethylene terephthalate resin and the like, and a styrenic, olefinic, urethanic, esteric and similar thermoplastic elastomers. The structural products as laminates of these thermoplastic resins mean multi-layered structural products produced by the publicly known molding methods such as an extrusion molding, an injection molding and the like, combining two or more kinds of these above-mentioned thermoplastic resins. As the combination of two or more kinds of the above-mentioned thermoplastic resins, a combination of the materials selected from polyamide resins, polyester resins, polypropylene resins and polyethylene resins is preferable. The above-mentioned thermoplastic resins shown in the examples may be a sole polymer or a composite polymer by the polymer alloy technique, or the like.

An examples of a structural product (that is, structure) made by lamination of thermoplastic resins of components (b) includes an automotive carpet in which a raised fabric of a polyamide resin, a polyester resin, a polypropylene resin or the like is lined with a polyethylene resin, a vinyl chloride resin or the like, a multi-layered sheet which is obtained by laminating a foamed resin layer as a cushion material with a fabric composed mainly of a thermoplastic resin on a polypropylene resin sheet, and a laminate of a foamed resin sheet with a film, a nonwoven fabric composed mainly of a thermoplastic resin, or the like. While an adhesive may be used for adhesion of these layer constituting products, the product containing the adhesive may be used as intact in the present invention. It is preferable to reduce the volume of the waste materials composed of the structural products which laminate the above-mentioned thermoplastic resins by crushing or cutting to waste material pieces or by heating to facilitate the addition and to secure quantitativity in measurement.

The same explanation of the epoxidized (partially hydrogenated) diene-based polymers (B) as described in the first aspect of the present invention may be exactly applied to the epoxidized (partially hydrogenated) diene-based polymers (c) in the second aspect of the present invention.

The content, the hydrogenation ratio and the epoxy equivalent of the component (c) in the second aspect of the present invention are preferably controlled according to the combination of the materials constituting the component (b).

Namely, the ratios of the above-mentioned component (a), component (b) and component (c) of the thermoplastic resin composition in the second aspect of the present invention are 20 to 67 weight %, 30 to 77 weight %, and 3 to 20 weight %, respectively, and are preferably selected from the range of 30 to 67 weight %, 30 to 70 weight % and 3 to 20 weight %, respectively.

In the second aspect of the present invention, a content lower than 3 weight % of the component (c) based on the regenerated thermoplastic resin composition may give little improvement effect of a flexibility, an impact resistance and a low-temperature resistance, and a content higher than 20 weight % may give saturation of the improvement effect and adverse effects such as decrease of a heat distortion temperature.

The ratio of the component (b) to the component (c) in the regenerated thermoplastic resin composition in the second aspect of the present invention is also important. When a regenerated thermoplastic resin composition comprising 50 weight % of a regenerated tuft carpet component and a low density polyethylene is prepared by use of a composition in which an automotive tuft carpet, for example, composed of a polyamide fabric and a low density polyethylene liner is used as the component (b), the content of the waste tuft carpet of 70 to 90 weight % to the component (c) of 30 to 10 weight % is preferable (100 weight % for the total).

To the regenerated thermoplastic resin composition in the second aspect of the present invention, heat stabilizers, light stabilizers, UV absorbers, thixotropic agents, antistatic agents, lubricants, antiblocking agents, flame retardants, coloring agents, foaming agents, fillers, reinforcing materials, softening agents normally used in thermoplastic resins may be added, and are selected from the aptitude to the objective performances and polymer species contained in the thermoplastic resin composition.

The regenerated thermoplastic resin composition in the second aspect of the present invention may be produced by diluting the intermediate composition obtained by blending a waste material composed of a thermoplastic resin as a component (b) and an epoxidized (partially hydrogenated) diene-based copolymer as a component (c) in melt or flowing state in advance with a non-rigid polyethylene resin as a component (a), or be produced by putting all components in a blender to blend simultaneously. Also it is possible to knead in advance the waste as a component (c) independently so as to pelletize, and to melt blend a component (b) and a component (c) therewith in the next process. The melt blending temperature may be selected to conform to the combination of the thermoplastic resins, and, as a guide, preferably is a temperature higher than the highest melting point or plasticizing temperature of the component having the highest melting point or plasticizing temperature among components constituting the waste material composed of thermoplastic resins as a component (b). For example, when the waste material of a tuft carpet which is flocked on a nonwoven fabric composed of polyethylene terephtahlate, about 260 to 280°C is suitable.

In blending, normally used blending machines for thermoplastic resins such as a Banbury mixer, a pressurized kneader, a single-screw extruder, a twin-screw extruder, a mixing roll and the like may be used.

The regenerated thermoplastic resin compositions, thus obtained, in the second aspect of the present invention, in which each components is closely mixed, are used for various resin molded products such as films, sheets, pipes, rods, flower pots, pallets, panels, boards and the like as a sole composition or a composition diluted with unused molding resin material or other recycled molding recycled materials including compositions of different combinations from the present invention.

### Examples

The first aspect of the present invention will be explained below, but the invention is not necessarily limited to these Examples. Physical properties in the Examples were measured according to the following methods.

### (1) Izod impact strength

Evaluated by ASTM D256 (sample thickness of 1/8 inch, measuring temperature of 23°C and -30°C, notched).

### (2) Flexural modulus

Evaluated by ASTM D790 (sample thickness of 1/8 inch).

### (3) Heat distortion temperature

Evaluated by ASTM D648 (sample thickness of 1/4 inch, flexural stress of 18.6 kgf/cm² or 4.6 kgf/cm²).

### (4) Moldability

Evaluated by the number of samples fractured in ten shots in molding plaque test pieces having 15cm long x 20cm wide x 3.2mm deep with a 5 oz. injection molding machine.

The following products were used in the Examples and Comparative Examples as resin pieces (A) of crushed molded products comprising a thermoplastic resin (A₁) or a thermoplastic resin composition (A₂), and epoxidized (partially hydrogenated) diene-based polymer (B).

### (1) Resin pieces (A) of a crushed molded product comprising a thermoplastic resin (A₁) or a thermoplastic resin composition (A₂)

### 1. Resin pieces of a crushed molded product comprising a saturated polyester resin:

Waste polyethylene terephthalate (R-PET): Flaky crushed product of bottles for beverages recovered after use (size 5 to 10 mm)

### 2. Resin pieces of a crushed molded product comprising a polycarbonate resin:

Waste polycarbonate (R-PC): Flaky crushed product of compact disks recovered after use (size 1 to 5 mm)

### (2) Epoxidized (partially hydrogenated) diene-based polymer (B)

### 1. Polymer (1)

Partially hydrogenated polyisoprene (a viscosity average molecular weight of 2,500, hydrogenation degree of 90%) was reacted with peracetic acid of 30 weight % ethyl acetate solution in cyclohexane solvent at 40°C for 4 hours, and the obtained epoxidized (partially hydrogenated) diene-based polymer solution was washed and vacuum dried to remove the solvent and polymer (1) was obtained (oxirane oxygen concentration of 1.82 weight %).

### 2. Polymer (2)

Partially hydrogenated styrene-butadiene block copolymer (a number average molecular weight of 67,000, styrene/butadiene weight ratio=3/7, hydrogenation degree of 79%) was epoxidized with peracetic acid in cyclohexane solvent at 50°C for 7 hours, and washed with water, and the cyclohexane containing polymer was poured in hot water and polymer (2) was obtained (oxirane oxygen concentration of 3.59 weight %).

### 3. Polymer (3)

Partially hydrogenated styrene-isoprene-styrene block copolymer (a number average molecular weight of 56,800, styrene/isoprene weight ratio = 3/7, hydrogenation degree of 75%) was epoxidized with peracetic acid in cyclohexane solvent at 50°C for 7 hours, washed with water, reprecipitated in methanol and vacuum dried to remove the residual solvent, and polymer (2) was obtained (oxirane oxygen concentration of 3.80 weight %).

### 4. Polymer (4)

Styrene-butadiene-styrene block copolymer (number average molecular weight of 69,200, styrene/butadiene weight ratio = 4/6) was epoxidized with peracetic acid in ethyl acetate solvent, washed with water and vacuum dried to remove the residual solvent, and polymer (4) was obtained (oxirane oxygen concentration of 2.98 weight

### (3) Glass fiber (reinforcing material)

GF: CS-03-MA429 (Produced by Asahi Glass Fiber Co., Ltd., size: 10µm diameter, 3 mm length).

### (Example 1)

Flaky crushed product of waste bottles for beverages (dried in a dehumidifying dryer at 140°C for 2 hours in advance) and epoxidized (partially hydrogenated) diene-based polymer were blended by dry blending in a composition as shown in Table 1 and melt blended at 260 °C barrel temperature with a 30 mmφtwin-screw extruder, and a composition in white pellets was obtained. Then, the pellets having the composition were dried at 140°C for 2 hours with a dehumidifying dryer, and test pieces for physical property measurement were molded at molding temperature of 280 °C and at mold temperature of 70°C with a 5 oz. injection machine. The measurement results of the test pieces are shown in Table 1.

### (Comparative Example 1)

The same method as in Example 1 was used except that no epoxidized (partially hydrogenated) diene-based polymer was added. The measurement results are shown in Table 1.

### (Examples 2 and 3)

Using a 30 mmφtwin-screw extruder with a side feed device mounted in the middle of the barrel, flaky crushed product of waste bottles for beverages (dried in a dehumidifying dryer at 140°C for 2 hours in advance) was fed through the main feeder and glass fibers were fed through the side feeder in the composition shown in Table 1, and a white pellet composition of glass fiber reinforced recycled polyethylene terephthalate was obtained without melt blending. The pellets having the composition were further dried with a dehumidifying dryer at 140°C for 2 hours and blended with the epoxidized (partially hydrogenated) diene-based polymer in the compositions as shown in Table 1 by dry blending, and test pieces for physical property measurement were molded under the condition of molding temperature of 280°C and mold temperature of 70°C with a 5 oz. injection machine. The measurement results of the test pieces are shown in Table 1.

### (Comparative Example 2)

Using flaky crushed product of waste bottles for beverages and glass fiber, the same method as in Example 2 was used except that no epoxidized (partially hydrogenated) diene-based polymer was added. The measurement results are shown in Table 1.

### (Examples 4 and 5)

Flaky crushed product of waste compact disks (dried in a dehumidifying dryer at 140°C for 2 hours in advance) and the epoxidized (partially hydrogenated) diene-based polymer were dry blended in compositions shown in Table 2 and melt blended at of barrel temperature of 260°C with a 30 mmφtwin-screw extruder, and a grayish white pellet composition was obtained, The pellets having the composition were dried at 110°C for 2 hours with a dehumidifying dryer, and test pieces for physical property measurement were molded under the condition of molding temperature of 280°C and mold temperature of 70°C with a 5 oz. injection machine. The measurement results of the test pieces are shown in Table 2.

### (Comparative Example 3)

The same method as in Example 4 was used except that no epoxidized (partially hydrogenated) diene-based polymer was added. The measurement results are shown in Table 2.

### (Examples 6 and 7)

Using a 30 mmφtwin-screw extruder with a side feed device mounted in the middle of the barrel, flaky crushed product of waste compact disks (dried in a dehumidifying dryer at 140°C for 2 hours in advance) and the epoxidized (partially hydrogenated) diene-based polymer were dry blended and fed through the main feeder and the flaky crushed product of waste bottles for beverages (dried at 110°C for 2 hours in advance) was fed through the side feeder and melt blended in the compositions shown in Table 3, and slightly grayish white pellet compositions were obtained. The composition pellets were further dried with a dehumidifying dryer at 140°C for 2 hours, and test pieces for physical property measurement were molded under the condition of molding temperature of 280°C and mold temperature of 70°C with a 5 oz. injection machine. The measurement results of the test pieces are shown in Table 3.

### (Example 8)

Using a 30 mmφtwin-screw extruder with a side feed device mounted in the middle of the barrel, the flaky crushed product of waste bottles for beverages (dried at 140°C for 2 hours in advance) and (B) the epoxidized (partially hydrogenated) diene-based polymer were dry blended and fed through the main feeder and the flaky crushed product of waste compact disks (dried at 110°C for 2 hours in advance) was fed through the side feeder and melt blended in the compositions shown in Table 3, and a slightly grayish white pellet composition was obtained. The composition pellets were dried with a dehumidifying dryer at 140°C for 2 hours, and test pieces for physical property measurement were molded under the condition of molding temperature of 280°C and mold temperature of 70°C with a 5 oz. injection machine. The measurement results of the test pieces are shown in Table 3.

### (Examples 9 to 11)

The flaky crushed product of waste bottles for beverages (dried at 140°C for 2 hours in advance), the flaky crushed product of waste compact disks (dried at 110 °C for 2 hours in advance) and the epoxidized (partially hydrogenated) diene-based polymer were dry blended in the compositions shown in Table 3, and melt blended with a 30 mmφtwin-screw extruder and grayish white pellet compositions were obtained. The pellets having the composition were dried with a dehumidifying dryer at 140 °C for 2 hours, and test pieces for physical property measurement were molded under the condition of molding temperature of 280 °C and mold temperature of 70 °C with a 5 oz. injection machine. The measurement results of the test pieces are shown in Table 3.

### (Comparative Examples 4 to 6)

The same method as in Example 9 was used except that no epoxidized (partially hydrogenated) diene-based polymer was added. The measurement results are shown in Table 3.

**TABLE 1**

| | Component | | | Izod impact strength (kgf.cm/cm²) | | Flexural modulus (kgf/cm²) | Heat distortion temperature (4.6kgf/cm²) (°C) |
|---|---|---|---|---|---|---|---|
| | (A) 1 (parts by weight) | (B) (parts by weight) | Others (parts by weight) | 23°C | -30°C | | |
| Example 1 | R-PET 80 | Polymer 1 20 | --- | 24 | 11.0 | 14800 | 115 |
| Comparative Example 1 | R-PET 100 | --- | --- | 4.4 | 4.0 | 30300 | 142 |
| Example 2 | R-PET 93 | Polymer 2 7 | GF 40 | 19 | 8.3 | 81200 | 238 |
| Example 3 | R-PET 88 | Polymer 3 12 | GF 38 | 20 | 10.5 | 68500 | 235 |
| Comparative Example 2 | R-PET 100 | --- | GF 43 | 8.2 | 7.3 | 88100 | 240 |

**TABLE 2**

| | Component1 | | Izod impact strength (kgf.cm/cm²) | | Flexural modulus (kgf/cm²) | Heat distortion temperature 18.6kgf/cm² (°C) | Moldability The number of fractured in ten shot |
|---|---|---|---|---|---|---|---|
| | (A) 2 (parts by weight) | (B) (parts by weight) | 23°C | -30°C | | | |
| Example 4 | R-PC 85 | Polymer 4 15 | 45 | 15 | 19000 | 128 | 0 |
| Example 5 | R-PC 95 | Polymer 2 5 | 13 | 7.5 | 23200 | 131 | 0 |
| Comparative Example 3 | R-PC 100 | --- | 3.2 | 2.9 | 24400 | 135 | 0 |

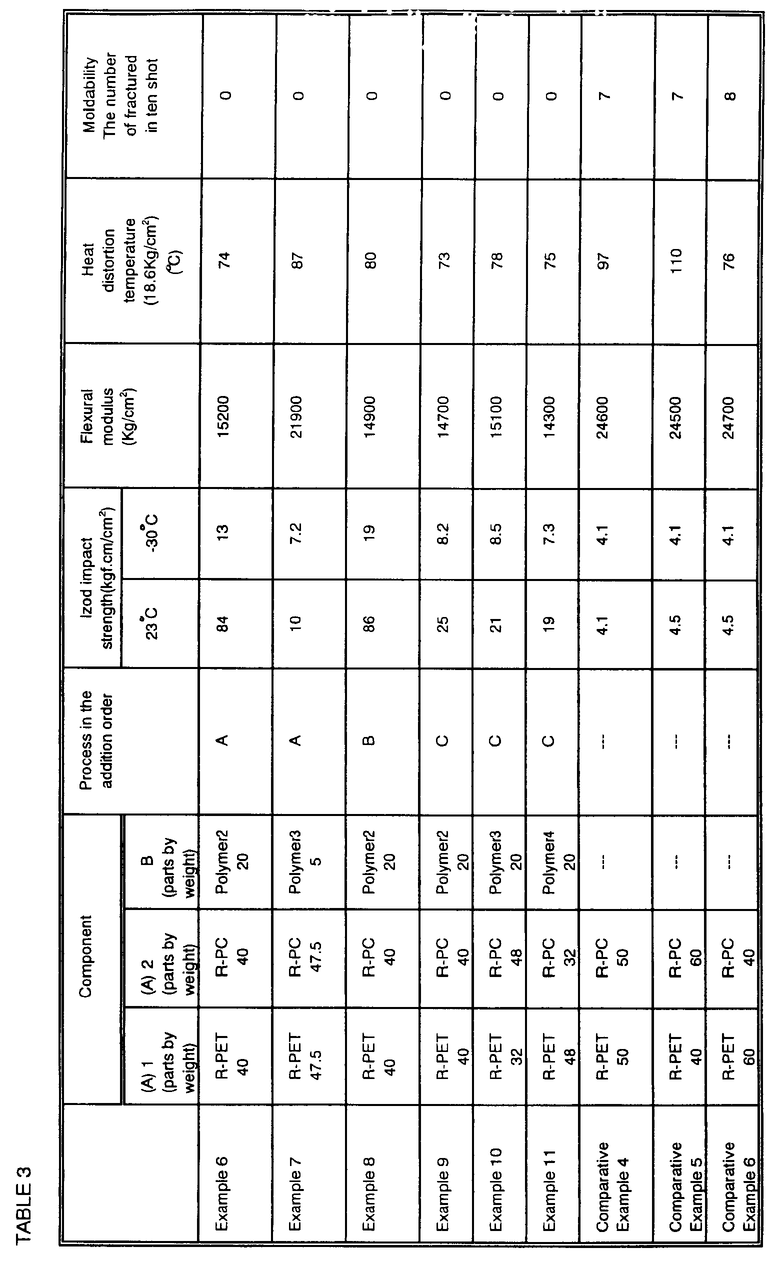

Processes A, B and C in the addition order in Table 3 are as follows:
A: Component (A)1 was melt blended after melt blending component (A)2 and component (B).
B: Component (A)2 was melt blended after melt blending component (A)1 and component (B).
C: Component (A)1, component (A)2 and component (B) were simultaneously melt blended.

As clearly shown by the Examples, molded products obtained from the regenerated thermoplastic resin compositions in the first aspect of the present invention prove to have excellent mechanical strength, especially superior impact strength, and excellent moldability.

Then, the second aspect of the present invention will be explained below, but the invention is not necessarily limited to these Examples. The ratio and % in the following descriptions are values based on the weight unless specifically noted, and the testing methods used for evaluations in Examples and Comparative Examples are as follows.

### (Testing methods)

(1) Melt flow rate (g/ 10 min.): JIS-K6760-1981, measured under the condition of 190°C, 2.16 kg load.
(2) Tensile properties: Tensile yield strength (kgf/cm²), tensile fractural strength (kgf/cm²) and tensile fractural elongation (%) were made with the No.2 type test pieces prepared from compression-molded sheets having the thickness of 2mm under the testing speed of 200 mm/min.
(3) Low-temperature resistance: 13 mm wide strip test pieces were cut out from compression molded sheet having the thickness of 2mm and kept at -30°C in a low temperature thermostat for 2 hours. After the predetermined time the test pieces were taken out and wound around a steel rod having the diameter of 10mm, and the performance was judged by the crack and fracture generation. In the judgement, ⓞ means no change (good), O means small crack (less than 1 mm long) generation (fair), and X means large crack (more than 1 mm long) generation or fracture (poor).

### (Production of epoxidized (partially hydrogenated) diene-based polymers (c))

### (Reference Examples 1 to 4: Polymers (1) to (4))

Same as polymers (1) to (4) of epoxidized (partially hydrogenated) diene-based polymers (B) explained in the Example 1 of the present invention.

### (Reference Examples 5: Polymers (5))

A hydrogenated styrene-butadiene block copolymer (a number average molecular weight of 78,500, styrene/butadiene weight ratio = 3/7, hydrogenation degree of 98%) was epoxidized with peracetic acid at 50°C for 7 hours, washed with water, and the residual solvent was removed in a vacuum dryer, and polymer (5) was obtained (oxygen hydrogen concentration was 0.30 weight %).

### (Example 12)

Chips of small particles obtained by crushing and heat treatment to reduce volume of the waste material of a polypropylene fiber made needle punched carpet (Composition of the thermoplastic resins is polypropylene resin: 45%, polyethylene terephthalate resin: 10%, low-density polyethylene resin: 40%, vinyl chloride resin: 5%) lined with low-density polyethylene resin, as the component (b) in the second aspect of the present invention, and the polymers (1) to (5) produced in Reference 1 to 5 as the components (c) were fed to and melt blended at the ratios shown in Table 4 in a twin-screw extruder set at cylinder temperature of 270°C, and the intermediate pellets relating to the second aspect of the present invention were obtained.

Then, the above-mentioned pellets and a low-density polyethylene resin (F222 manufactured by Ube Kosan, density of 0.922) as a component (a) were supplied to a single-screw extruder set at cylinder temperature of 200°C, and pellets of a regenerated thermoplastic resin composition relating to the second aspect of the present invention containing 30% of the regenerated resin component from the needle punched carpet were produced, then finally a sheet having the thickness of 2mm was obtained at 160°C by compression molding. Various test pieces were prepared and the physical properties were measured. The results are shown in Table 4.

### (Comparative Example 7)

The same waste material of the needle punched carpet as used in Example 12 as a component (b) and a low-density polyethylene as component (a) were used, and a composition without the component (c) of the Comparative Example in Table 4 and a composition which contains the component (c) exceeding the range of the present invention were prepared by the same procedures and method as in Example 12, and their physical properties were measured. The results are shown in Table 4.

### (Example 13)

Chips of small particles obtained by crushing and heat treatment to reduce volume of the waste material of a polyamide made tuft carpet (Composition of the thermoplastic resins is polyamide resin: 40%, polyethylene terephthalate resin: 10%, low-density polyethylene resin: 50%) as the component (b), and the polymers (1) to (5) produced in Reference 1 to 5 as the components (c) were fed to and melt blended at the ratios shown in Table 5 in a twin-screw extruder set at cylinder temperature of 280°C, and the intermediate pellets relating to the second aspect of the present invention were obtained.

These pellets and a low-density polyethylene (F222 manufactured by Ube Kosan) as a component (a) were fed to a single-screw extruder set at cylinder temperature of 200°C, and pellets of a recycled thermoplastic resin composition containing 30 to 50 % of the recycled resin component from the tuft carpet were produced, then finally a sheet having the thickness of 2mm was obtained at 160°C by compression molding. Various test pieces were prepared and the physical properties were measured. The results are shown in Table 5.

### (Comparative Example 8)

Using the same waste material of the tuft carpet as used in Example 13 as a component (b), a composition without the component (c) shown in the Comparative Example in Table 5 and a composition which contains the component (c) exceeding the range were obtained by the same procedures and method as in Example 12. Then, similarly the product was blended with a low-density polyethylene as a component (a), and the physical properties of the final compositions obtained were measured. The results are shown in Table 5.

From Example 12, every recycled thermoplastic resin composition relating to the second aspect of the present invention proves to have greatly improved flexibility judged from the yield strength, tensile fractural elongation and low-temperature resistance compared with Comparative Example 7.

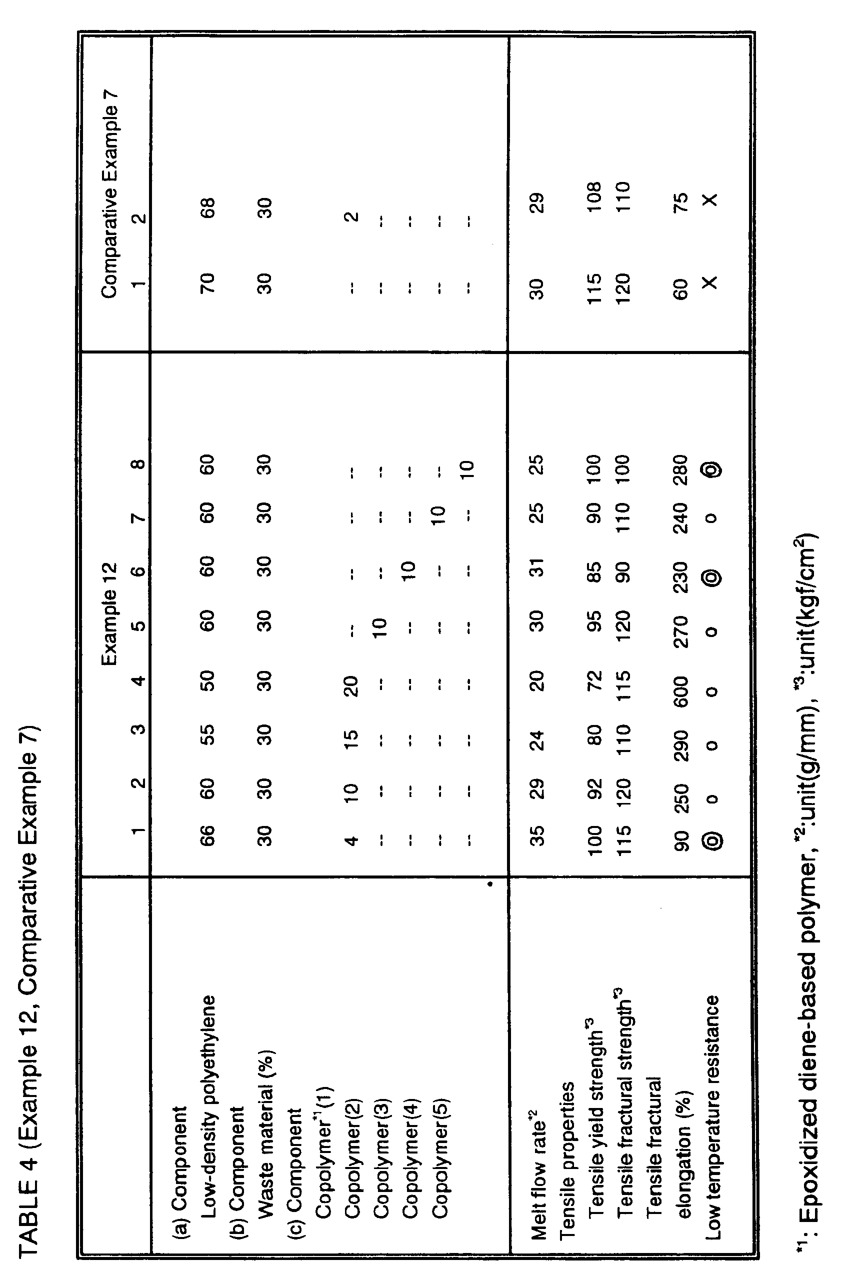

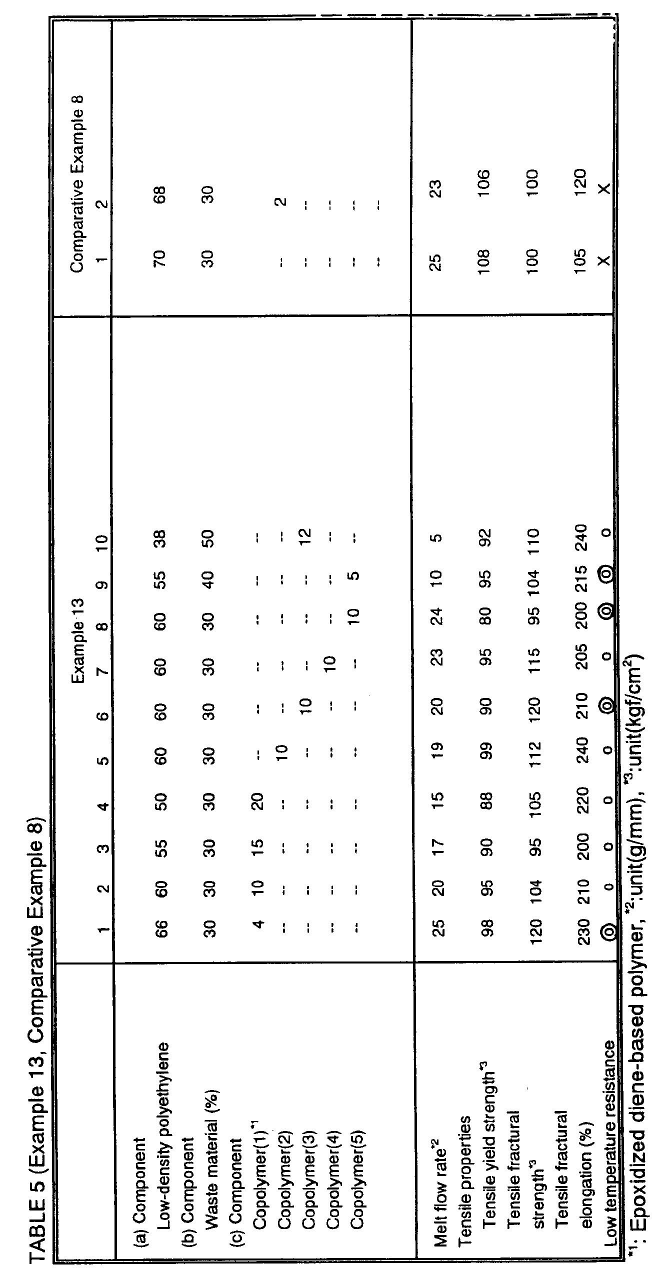

### Possibilities in industrial application

The regenerated thermoplastic resin compositions have excellent physical properties as indicated by improved physical properties including impact resistance and moldability, and can afford products by remolding. The present invention can also offer an extremely effective means as a countermeasure against environmental problems such as plastic pollution.

According to the second aspect of the present invention, waste materials laminating two or more kinds of thermoplastic resins can be reused without complicated processes such as separation. Moreover, if necessary, only with a relatively simple pretreatment such as volume reduction, regenerated thermoplastic resin compositions of good properties such as fluidity, strength property and low-temperature resistance can be obtained. In particular, it became possible to offer regenerated thermoplastic resin compositions of high level waste material content which has been difficult so far.

## Claims

1. A production method of a regenerated resin composition, characterized by melt blending: 0.1 to 30 parts by weight of an epoxidized (partially hydrogenated) diene-based polymer (B) to 100 parts by weight of resin pieces (A) which are obtained by crushing a molded product composed of a thermoplastic resin (A₁) or a thermoplastic resin composition (A₂).

2. The production method of a regenerated thermoplastic resin composition as defined in Claim 1, wherein the thermoplastic resin (A₁) is a saturated polyester resin.

3. The production method of a regenerated thermoplastic resin composition as defined in Claim 1, wherein the thermoplastic resin (A₁) is a polycarbonate resin.

4. The production method of a regenerated thermoplastic resin composition as defined in Claim 1, wherein the thermoplastic resin composition (A₂) comprises at least two kinds of thermoplastic resins selected from the group consisting of a saturated polyester resin, a polycarbonate resin, a polyamide resin, an ABS resin, a polystyrene resin, an AS resin, a polyarylene sulfide resin, a polyarylene ester resin and a polyphenylene ether resin.

5. The production method of a regenerated thermoplastic resin composition as defined in Claim 1, wherein the resin pieces (A) are obtained by crushing a bottle comprising a polyethylene terephthalate resin.

6. The production method of a regenerated thermoplastic resin composition as defined in Claim 1, wherein the resin pieces (A) are obtained by crushing a compact disk comprising a polycarbonate resin.

7. The production method of a regenerated thermoplastic resin composition as defined in Claim 1, wherein the resin pieces (A) are a mixture of at least two kinds of resin pieces obtained by crushing molded products comprising mutually different thermoplastic resins (A₁) or thermoplastic resin compositions (A₂).

8. The production method of a regenerated thermoplastic resin composition as defined in Claim 7, wherein the mixture of resin pieces is a mixture of resin pieces obtained by crushing a molded product comprising a saturated polyester resin and resin pieces obtained by crushing a molded product comprising a polycarbonate resin.

9. The production method of a regenerated thermoplastic resin composition as defined in Claim 8, wherein the resin pieces obtained by crushing a molded product comprising a saturated polyester resin are melt blended in advance with an epoxidized (partially hydrogenated) diene-based polymer (B), and subsequently melt blended with the resin pieces obtained by crushing a molded product comprising a polycarbonate resin.

10. The production method of a regenerated thermoplastic resin composition as defined in Claim 8, wherein the resin pieces obtained by crushing a molded product comprising a polycarbonate resin are melt blended in advance with an epoxidized (partially hydrogenated) diene-based polymer (B), and subsequently melt blended with the resin pieces obtained by crushing a molded product comprising a saturated polyester resin.

11. The production method of a regenerated thermoplastic resin composition as defined in Claim 1, wherein the epoxidized (partially hydrogenated) diene-based polymer (B) is a polymer in which at least one double bond per molecule of the double bonds from the conjugated diene compound is epoxidized.

12. The production method of a regenerated thermoplastic resin composition as defined in Claim 1, wherein the epoxidized (partially hydrogenated) diene-based polymer (B) is a polymer in which at least one of the double bonds from the conjugated diene compound in the block copolymer comprising a polymer block composed mainly of a vinyl aromatic compound and a polymer block composed mainly of a conjugated diene compound is epoxidized.

13. The production method of a regenerated thermoplastic resin composition as defined in Claim 11 or Claim 12, wherein the epoxidized (partially hydrogenated) diene-based polymer (B) is a polymer in which the double bonds from the conjugated diene compound are partially hydrogenated and at least one of the residual double bonds from the conjugated diene compound is epoxidized.

14. A regenerated thermoplastic resin composition which is prepared by melt blending 0.1 to 30 parts by weight of epoxidized (partially hydrogenated) diene-based polymer (B) to 100 parts by weight of resin pieces (A) obtained by crushing a molded product comprising a thermoplastic resin (A₁) or a thermoplastic resin composition (A₂).

15. A production method of a regenerated thermoplastic resin composition, characterized by melt blending 20 to 67 weight % of a non-rigid polyethylene resin (a), 30 to 77 weight % of a waste material of a structure (b) made by laminating at least two kinds of thermoplastic resins, and 3 to 20 weight % of an epoxidized (partially hydrogenated) diene-based polymer (c).

16. A regenerated thermoplastic resin composition comprising 20 to 67 weight % of a non-rigid polyethylene resin (a), 30 to 77 weight % of a waste material of a structure (b) made by laminating at least two kinds of thermoplastic resins, and 3 to 20 weight % of an epoxidized (partially hydrogenated) diene-based polymer (c).

17. The regenerated thermoplastic resin composition as defined in Claim 16, wherein the two or more kinds of thermoplastic resins in the component (b) are a combination of the materials selected from the group consisting of a polyamide resin, a polyester resin, a polypropylene resin and a polyethylene resin.

18. The regenerated thermoplastic resin composition as defined in Claim 16, wherein the epoxidized (partially hydrogenated) diene-based polymer (c) is a polymer in which at least one of the double bonds per molecule from the conjugated diene compound is epoxidized.

19. The regenerated thermoplastic resin composition as defined in Claim 16, wherein the epoxidized (partially hydrogenated) diene-based polymer (c) is a polymer in which at least one of the double bonds from the conjugated diene compound in the block copolymer comprising a polymer block composed mainly of vinyl aromatic compound and a polymer block composed mainly of conjugated diene compound is epoxidized.

20. The regenerated thermoplastic resin composition as defined in Claim 16, wherein the epoxidized (partially hydrogenated) diene-based polymer (c) is a polymer in which the double bonds from the conjugated diene compound are partially hydrogenated and at least one of the residual double bonds from the conjugated diene compound is epoxidized.
